# EUROPEAN PATENT APPLICATION

(11) **EP 3 024 153 A1**
(43) Date of publication of application: **25.05.2016**
(21) Application number: 13891239.9
(22) Date of filing: 09.08.2013
(51) Int. Cl.: H04B 7/00

(54) **METHOD AND SYSTEM FOR SHARING ANTENNA BY MULTIPLE OPERATORS AND RADIO-FREQUENCY DIGITAL CONVERSION UNIT**

(71) Applicant: Huawei Technologies Co., Ltd., Longgang District Shenzhen, Guangdong 518129 (CN)
(72) Inventor: PU, Tao, Shenzhen Guangdong 518129 (CN); WANG, Dayong, Shenzhen Guangdong 518129 (CN); ZHANG, Jianhua, Shenzhen Guangdong 518129 (CN); LIN, Liqiang, Shenzhen Guangdong 518129 (CN); CHANG, Xiaotao, Shenzhen Guangdong 518129 (CN); PAN, Jun, Shenzhen Guangdong 518129 (CN)
(74) Representative: Epping - Hermann - Fischer
(86) International application number: PCT/CN2013/081160
(87) International publication number: WO 2015/018057

(57) **Abstract**

The present invention provides a method and system for sharing an antenna between multiple operators and a radio frequency and digital conversion unit, where the system includes the radio frequency and digital conversion unit and an active antenna; the radio frequency and digital conversion unit is configured to convert a radio frequency signal of each radio frequency module into a digital signal, and send digital signals of a same sector to an active antenna corresponding to the sector; and the active antenna is configured to perform at least one of vertical beam forming processing and horizontal beam forming processing on received digital signals according to a signal transmitting parameter that is set for each operator, convert the processed digital signals into radio frequency signals, and then transmit the radio frequency signals from an air interface. The present invention facilitates different network planning and network optimization performed by each operator on a precondition that multiple operators share an antenna.

## Description

### TECHNICAL FIELD

The present invention relates to the field of network communications technologies, and in particular, to a method and a system for sharing an antenna between multiple operators and to a radio frequency and digital conversion unit.

### BACKGROUND

With an increase of difficulty in selecting a site of a base station, it is more popular for multiple operators to share a site of a base station. Generally, one frequency band is allocated to 3 operators in a country or region. Therefore, for one frequency band, devices of 3 operators may exist at one site: 3 base stations and 3 sectors, which means that 9 antennas are required for one frequency band at one site. Currently, tri-band networks are prevailing, which means that 27 antennas are required at this one site. Obviously, it is difficult to deploy so many antennas at one site. Therefore, the operators may replace a single-band antenna with a multi-band antenna, which is one of solutions. In addition, that multiple operators share an antenna is also an effective way to reduce antenna devices at a site. Especially, for a site at which multiple operators share a tower, with an increase of new frequency bands and new standards, load of the tower is increasing, and the load of the tower needs to be reduced by sharing an antenna between multiple operators.

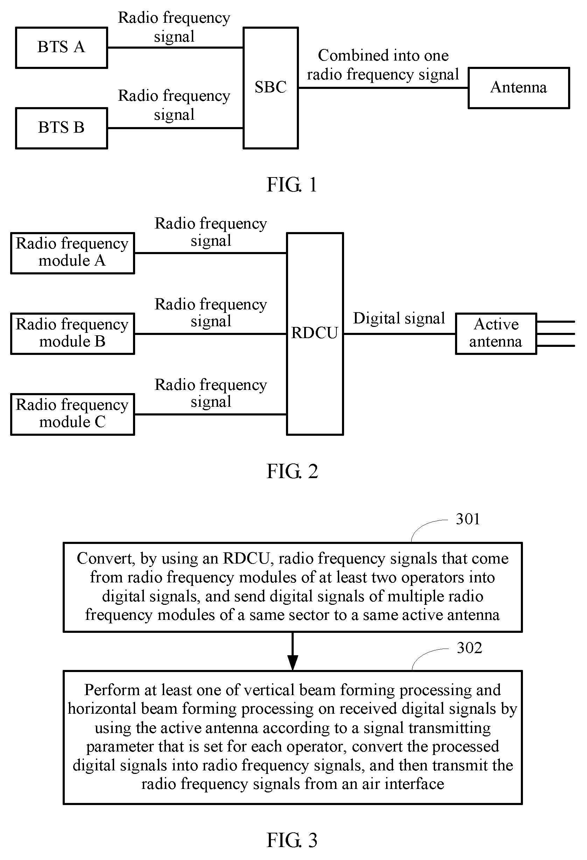

In the prior art, a main manner of sharing an antenna between multiple operators is to add a same-band combiner (SBC, Same Band Combiner) so that multiple operators share an antenna. As shown in FIG. 1, base transceiver stations (BTS, Base Transceiver Station) of multiple operators, such as a BTS A and a BTS B shown in FIG. 1, are connected to a same SBC, and the SBC combines radio frequency signals of the multiple operators and sends the signals to one antenna by using a feeder, thereby implementing antenna sharing. However, this manner has the following defects: The operators share an antenna, but cannot set a signal transmitting parameter such as a tilt angle, an azimuth, and a beam width independently, which means that each operator is unable to perform different network planning and network optimization, and network performance is hardly optimal.

### SUMMARY

In view of this, embodiments of the present invention provide a method and system for sharing an antenna between multiple operators and a radio frequency and digital conversion unit to facilitate different network planning and network optimization performed by each operator on a precondition that multiple operators share an antenna.

According to a first aspect, an embodiment of the present invention provides a system for sharing an antenna between multiple operators, where the system includes a radio frequency and digital conversion unit and an active antenna;
the radio frequency and digital conversion unit is configured to convert radio frequency signals that come from radio frequency modules of at least two operators into digital signals, and send digital signals of a same sector to an active antenna corresponding to the sector; and
the active antenna is configured to perform at least one of vertical beam forming processing and horizontal beam forming processing on received digital signals according to a signal transmitting parameter that is set for each operator, convert the processed digital signals into radio frequency signals of a corresponding air interface frequency, and then transmit the radio frequency signals from an air interface, where each operator corresponds to a different air interface frequency.

With reference to a first implementation manner of the first aspect, that the radio frequency and digital conversion unit is configured to send digital signals of a same sector to an active antenna corresponding to the sector specifically includes the following: the radio frequency and digital conversion unit is configured to perform down-conversion, digital filtering, and IQ (in-phase quadrature, In-phase Quadrature) signal extraction on digital signals obtained by means of conversion, perform scheduling and framing on IQ signals of a same sector, and then send the IQ signals to an active antenna corresponding to the sector.

In a second implementation manner with reference to the first aspect or the first implementation manner of the first aspect, the signal transmitting parameter includes an antenna tilt angle, and that the active antenna is configured to perform vertical beam forming processing on received digital signals specifically includes: setting a corresponding digital beam forming DBF parameter according to an antenna tilt angle that is set for each operator, so that an independent adjustment on an antenna tilt angle of a beam of each operator can be implemented, where the setting a DBF parameter is to adjust a weight of the antenna tilt angle for a transceiver TRX channel that generates a beam in a vertical direction of the antenna.

In a third implementation manner with reference to the first aspect or the first or second implementation manner of the first aspect, the signal transmitting parameter includes an antenna azimuth or a beam width, and that the active antenna is configured to perform horizontal beam forming processing on received digital signals specifically includes: setting a corresponding DBF parameter according to an antenna azimuth or a beam width that is set for each operator, so that an independent adjustment on at least one of an antenna azimuth and a beam width of a beam of each operator can be implemented, where the setting a DBF parameter is to adjust a weight of the antenna azimuth or the beam width for a TRX channel that generates a beam in a horizontal direction of the antenna.

In a fourth implementation manner with reference to the first aspect or any one of the first to third implementation manners of the first aspect, the radio frequency and digital conversion unit is further configured to receive, from a network management system, the signal transmitting parameter that is set for each operator, and send the signal transmitting parameter to the active antenna.

In a fifth implementation manner with reference to the first aspect or the first to fourth implementation manners of the first aspect, the system further includes a frequency converting unit disposed between a radio frequency module and the radio frequency and digital conversion unit; and
the frequency converting unit is configured to: receive a radio frequency signal that comes from a radio frequency module of at least one operator, where the radio frequency module of one operator of the at least one operator is configured to process and output radio frequency signals that are of a same operator and correspond to different sectors, and the radio frequency signals corresponding to different sectors are differentiated by using different sector frequencies; convert a frequency of the radio frequency signals into a corresponding air interface frequency according to a correspondence between a sector frequency and an air interface frequency, and send radio frequency signals whose frequency is converted to the radio frequency and digital conversion unit.

According to a second aspect, an embodiment of the present invention provides a system for sharing an antenna between multiple operators, where the system includes a radio frequency and digital conversion unit and an active antenna;
the active antenna is configured to convert radio frequency signals that are received from an air interface and have at least two air interface frequencies into digital signals, and then perform at least one of vertical beam forming processing and horizontal beam forming processing on the digital signals according to a signal transmitting parameter that is set for each operator of at least two operators, and then send the digital signals to the radio frequency and digital conversion unit, where each operator corresponds to a different air interface frequency; and
the radio frequency and digital conversion unit is configured to decompose a digital signal sent by the active antenna into digital signals corresponding to radio frequency modules of at least two operators, and then convert the decomposed digital signals into radio frequency signals that correspond to the radio frequency modules of the at least two operators and have the corresponding air interface frequencies, and send the radio frequency signals to the corresponding radio frequency modules.

In an implementation manner with reference to the second aspect, the signal transmitting parameter includes an antenna tilt angle, and the performing, by the active antenna, vertical beam forming processing on the digital signals obtained after conversion specifically includes: setting a corresponding DBF parameter according to an antenna tilt angle that is set for each operator, so that an independent adjustment on an antenna tilt angle of a beam of each operator can be implemented, where the setting a DBF parameter is to adjust a weight of the antenna tilt angle for a TRX channel that generates a beam in a vertical direction of the antenna.

In a second implementation manner with reference to the second aspect or the second aspect, the signal transmitting parameter includes an antenna azimuth or a beam width, and the performing, by the active antenna, horizontal beam forming processing on the digital signals obtained after conversion specifically includes: setting a corresponding DBF parameter according to an antenna azimuth or a beam width that is set for each operator, so that an independent adjustment on at least one of an antenna azimuth and a beam width of a beam of each operator can be implemented, where the setting a DBF parameter is to adjust a weight of the antenna azimuth or the beam width for a TRX channel that generates a beam in a horizontal direction of the antenna.

In a second implementation manner with reference to the second aspect or the first implementation manner of the second aspect, the radio frequency and digital conversion unit is specifically configured to: deframe a digital signal sent by the active antenna to separate out IQ signals of at least two operators, and then perform up-conversion and digital-to-analog conversion on the IQ signals to convert the IQ signals into radio frequency signals, and sending the radio frequency signals obtained by means of conversion to corresponding radio frequency modules.

In a third implementation manner with reference to the second aspect or the first or second implementation manner of the second aspect, the radio frequency and digital conversion unit is further configured to receive, from a network management system, the signal transmitting parameter that is set for each operator, and send the signal transmitting parameter to the active antenna.

With reference to the second aspect or a fourth implementation manner of the first to third implementation manners of the second aspect, the system further includes a frequency converting unit disposed between a radio frequency module and the radio frequency and digital conversion unit; and
the frequency converting unit is configured to: receive a radio frequency signal sent by the radio frequency and digital conversion unit, convert a frequency of the radio frequency signal into a corresponding sector frequency according to a correspondence between a sector frequency and an air interface frequency, and then send radio frequency signals of different sectors of a same operator to corresponding radio frequency modules, where the radio frequency module of one operator in the at least two operators is configured to receive and process radio frequency signals corresponding to different sectors, and the radio frequency signals corresponding to different sectors are differentiated by using different sector frequencies.

According to a third aspect, an embodiment of the present invention provides a radio frequency and digital conversion unit, where the radio frequency and digital conversion unit includes a radio frequency card and a digital card;
the radio frequency card is configured to convert radio frequency signals that come from radio frequency modules of at least two operators and have corresponding air interface frequencies into digital signals, and then provide the digital signals for the digital card, where each operator corresponds to a different air interface frequency; and
the digital card is configured to send digital signals of a same sector to an active antenna corresponding to the sector.

With reference to a first implementation manner of the third aspect, the radio frequency card is specifically configured to: perform analog-to-digital conversion on the radio frequency signals that come from each radio frequency module of the at least two operators to convert the radio frequency signals into digital signals, and then perform down-conversion, digital filtering and IQ signal extraction on the digital signals; and
the digital card is specifically configured to perform scheduling and framing on IQ signals of a same sector and then send the IQ signals to an active antenna corresponding to the sector.

In a second implementation manner with reference to the third aspect or the first implementation manner of the third aspect, the radio frequency and digital conversion unit further includes:
a subunit that is configured to receive, from a network management system, a signal transmitting parameter that is set for each operator, and send the signal transmitting parameter to the active antenna.

In a third implementation manner with reference to the third aspect or the first or second implementation manner of the third aspect, the radio frequency and digital conversion unit further includes a frequency converting unit; and
the frequency converting unit is configured to: receive a radio frequency signal that comes from a radio frequency module of at least one operator, where the radio frequency module of the at least one operator is configured to process and output radio frequency signals that are of a same operator and correspond to different sectors, and the radio frequency signals corresponding to different sectors are differentiated by using different sector frequencies; convert a frequency of the radio frequency signals into a corresponding air interface frequency according to a correspondence between a sector frequency and an air interface frequency, and send radio frequency signals whose frequency is converted to the radio frequency card.

According to a fourth aspect, an embodiment of the present invention provides a radio frequency and digital conversion unit, where the radio frequency and digital conversion unit includes a radio frequency card and a digital card;
the digital card is configured to decompose a digital signal sent by an active antenna into digital signals corresponding to radio frequency modules of at least two operators; and
the radio frequency card is configured to convert the decomposed digital signals into radio frequency signals that correspond to at least two operators and have corresponding air interface frequencies, and send the radio frequency signals to corresponding radio frequency modules, where each operator corresponds to a different air interface frequency.

With reference to the fourth aspect or a first implementation manner of the fourth aspect, the digital card is specifically configured to deframe a digital signal sent by the active antenna to separate out IQ signals corresponding to at least two operators; and
the radio frequency card is specifically configured to perform up-conversion and digital-to-analog conversion on the IQ signals to convert the IQ signals into radio frequency signals, and send the radio frequency signals to corresponding radio frequency modules.

In a second implementation manner with reference to the fourth aspect or the first implementation manner of the fourth aspect, the radio frequency and digital conversion unit further includes:
a subunit that is configured to receive, from a network management system, a signal transmitting parameter that is set for each operator, and send the signal transmitting parameter to the active antenna.

In a third implementation manner with reference to the fourth aspect or the first or second implementation manner of the fourth aspect, the radio frequency and digital conversion unit further includes a frequency converting unit, configured to: receive a radio frequency signal sent by the radio frequency card, convert a frequency of the radio frequency signal into a corresponding sector frequency according to a correspondence between a sector frequency and an air interface frequency, and then send radio frequency signals of different sectors of a same operator to a same radio frequency module, where the radio frequency module is configured to receive and process radio frequency signals that are of a same operator and correspond to different sectors, and the radio frequency signals corresponding to different sectors are differentiated by using different sector frequencies.

According to a fifth aspect, an embodiment of the present invention provides a method for sharing an antenna between multiple operators, where the method includes:
converting radio frequency signals into digital signals by using a radio frequency and digital conversion unit, where the radio frequency signals come from radio frequency modules of at least two operators and have corresponding air interface frequencies, and sending digital signals of a same sector to an active antenna corresponding to the sector, where each operator corresponds to a different air interface frequency; and
performing at least one of vertical beam forming processing and horizontal beam forming processing on received digital signals by using the active antenna according to a signal transmitting parameter that is set for each operator, converting the processed digital signals into radio frequency signals, and then transmitting the radio frequency signals from an air interface.

In a first implementation manner with reference to the fifth aspect, the sending digital signals of a same sector to an active antenna corresponding to the sector specifically includes:
performing down-conversion, digital filtering, and IQ signal extraction on the digital signals, performing scheduling and framing on IQ signals of the same sector, and then sending the IQ signals to the active antenna corresponding to the sector.

In a second implementation manner with reference to the fifth aspect or the first implementation manner of the fifth aspect, the signal transmitting parameter includes an antenna tilt angle, and the performing, by the active antenna, vertical beam forming processing on received digital signals specifically includes: setting a corresponding digital beam forming DBF parameter according to an antenna tilt angle that is set for each operator, so that an independent adjustment on an antenna tilt angle of a beam of each operator can be implemented, where the setting a DBF parameter is to adjust a weight of the antenna tilt angle for a transceiver TRX channel that generates a beam in a vertical direction of the antenna.

In a third implementation manner with reference to the fifth aspect or the first or second implementation manner of the fifth aspect, the signal transmitting parameter includes an antenna azimuth or a beam width, and the performing, by the active antenna, horizontal beam forming processing on received digital signals specifically includes: setting a corresponding DBF parameter according to an antenna azimuth or a beam width that is set for each operator, so that an independent adjustment on at least one of an antenna azimuth and a beam width of a beam of each operator can be implemented, where the setting a DBF parameter is to adjust a weight of the antenna azimuth or the beam width for a TRX channel that generates a beam in a horizontal direction of the antenna.

In a fourth implementation manner with reference to the fifth aspect or any one of the first to third implementation manners of the fifth aspect, the method further includes:
receiving, from a network management system and by using the radio frequency and digital conversion unit, a signal transmitting parameter that is set for each operator, and sending the signal transmitting parameter to the active antenna.

With reference to the fifth aspect or a fifth implementation manner of any one of the first to fourth implementation manners of the fifth aspect, before converting a radio frequency signal of each radio frequency module into a digital signal by using a radio frequency and digital conversion unit, the method further includes:
receiving, by using a frequency converting unit, a radio frequency signal that comes from a radio frequency module of at least one operator, where the radio frequency module of the at least one operator is configured to process and output radio frequency signals that are of a same operator and correspond to different sectors, and the radio frequency signals corresponding to different sectors are differentiated by using different sector frequencies; converting a frequency of the radio frequency signals into a corresponding air interface frequency according to a correspondence between a sector frequency and an air interface frequency, and sending radio frequency signals whose frequency is converted to the radio frequency and digital conversion unit.

According to a sixth aspect, a method for sharing an antenna between multiple operators is provided, where the method includes:
converting, by using an active antenna, radio frequency signals that are received from an air interface and have at least two air interface frequencies into digital signals, and then performing at least one of vertical beam forming processing and horizontal beam forming processing on the digital signals according to a signal transmitting parameter that is set for each operator, and then sending the digital signals to a radio frequency and digital conversion unit, where each operator corresponds to a different air interface frequency; and
decomposing, by using the radio frequency and digital conversion unit, a digital signal sent by the active antenna into digital signals corresponding to radio frequency modules of at least two operators, and then converting the decomposed digital signals into radio frequency signals that correspond to the radio frequency modules of the at least two operators and have corresponding air interface frequencies, and sending the radio frequency signals to corresponding radio frequency modules.

In a first implementation manner with reference to the sixth aspect, the signal transmitting parameter includes an antenna tilt angle, and the performing, by using an active antenna, vertical beam forming processing on the digital signals obtained after conversion specifically includes: setting a corresponding DBF parameter according to an antenna tilt angle that is set for each operator, so that an independent adjustment on an antenna tilt angle of a beam of each operator can be implemented, where the setting a DBF parameter is to adjust a weight of the antenna tilt angle for a TRX channel that generates a beam in a vertical direction of the antenna.

In a second implementation manner with reference to the sixth aspect or the first implementation manner of the sixth aspect, the signal transmitting parameter includes an antenna azimuth or a beam width, and the performing, by an active antenna, horizontal beam forming processing on the digital signals obtained after conversion specifically includes: setting a corresponding DBF parameter according to an antenna azimuth or a beam width that is set for each operator, so that an independent adjustment on at least one of an antenna azimuth and a beam width of a beam of each operator can be implemented, where the setting a DBF parameter is to adjust a weight of the antenna azimuth or the beam width for a TRX channel that generates a beam in a horizontal direction of the antenna.

In a third implementation manner with reference to the sixth aspect or the first or second implementation manner of the sixth aspect, the decomposing, by using the radio frequency and digital conversion unit, a digital signal sent by the active antenna into digital signals corresponding to radio frequency modules of at least two operators, and then converting the decomposed digital signals into radio frequency signals that correspond to the radio frequency modules of the at least two operators and have corresponding air interface frequencies, and sending the radio frequency signals to corresponding radio frequency modules specifically include:
deframing, by using the radio frequency and digital conversion unit, a digital signal sent by the active antenna to separate out IQ signals of the at least two operators, and then performing up-conversion and digital-to-analog conversion on the IQ signals to convert the IQ signals into radio frequency signals, and sending radio frequency signals obtained by means of conversion to corresponding radio frequency modules.

In a fourth implementation manner with reference to the sixth aspect or any one of the first to third implementation manners of the sixth aspect, the method further includes:
receiving, from a network management system and by using the radio frequency and digital conversion unit, a signal transmitting parameter that is set for each operator, and sending the signal transmitting parameter to the active antenna.

In a fifth implementation manner with reference to the sixth aspect or any one of the first to fourth implementation manners of the sixth aspect, after converting a digital signal into a radio frequency signal of each radio frequency module and sending the radio frequency signal to a corresponding radio frequency module separately, the method further includes:
receiving, by using a frequency converting unit, a radio frequency signal sent by the radio frequency and digital conversion unit, converting a frequency of the radio frequency signal into a corresponding sector frequency according to a correspondence between a sector frequency and an air interface frequency, and then sending radio frequency signals of different sectors of a same operator to corresponding radio frequency modules, where the radio frequency module is configured to receive and process radio frequency signals that are of a same operator and correspond to different sectors, and the radio frequency signals corresponding to different sectors are differentiated by using different sector frequencies.

It can be learned from the foregoing technical solutions that, the embodiments of the present invention, with reference to a radio frequency and digital conversion unit and an active antenna, implement antenna sharing between multiple operators. That is, radio frequency signals that are sent by radio frequency modules of multiple operators and are in a same sector can be ultimately transmitted by using a common active antenna. In addition, each operator can set a signal transmitting parameter for the active antenna, and independent network planning and network optimization of each operation can be implemented by means of at least one of vertical beam forming processing and horizontal beam forming processing of the active antenna.

### BRIEF DESCRIPTION OF DRAWINGS

FIG. 1 is a schematic diagram of a system for sharing an antenna between multiple operators in the prior art;
FIG. 2 is a structural diagram of a system for sharing an antenna between multiple operators in a single sector according to an embodiment of the present invention;
FIG. 3 is a flowchart of a method for a downlink signal according to an embodiment of the present invention;
FIG. 4 is a flowchart of a method for an uplink signal according to an embodiment of the present invention;
FIG. 5 is a structural diagram of a system for sharing an antenna between multiple operators in multiple sectors according to an embodiment of the present invention;
FIG. 6 is a structural diagram of another system for sharing an antenna between multiple operators in multiple sectors according to an embodiment of the present invention; and
FIG. 7 is a schematic structural diagram of a radio frequency and digital conversion unit according to an embodiment of the present invention.

### DESCRIPTION OF EMBODIMENTS

To make the objectives, technical solutions, and advantages of the present invention clearer, the following further describes the present invention in detail with reference to the accompanying drawings and specific embodiments.

In an embodiment of the present invention, a radio frequency and digital conversion unit (RDCU, Radio Frequency and Digital Conversion Unit) and an active antenna unit (AAU, Active Antenna Unit) are added to implement that multiple operators share an antenna. "Multiple" mentioned in the embodiments of the present invention refers to two or more than two. The active antenna unit may also be referred to as an active antenna system (AAS, Active Antenna System), or referred to as an active antenna (AA) for short. Depending on an extent of integration between a radio frequency module and an antenna, the active antenna system may come in two forms: semi-integrated and integrated. An integrated active antenna system generally includes multiple TRX (transceiver) units and multiple antenna elements (antenna element). The TRX units may be connected to the antenna elements by using a feeder network. In the embodiments of the present invention, the active antenna unit may be implemented by using an integrated structure.

Signal differentiation between operators is based on a frequency. That is, different operators use different signal frequencies (frequency channel numbers). Generally, each operator uses a different radio frequency module to send a radio frequency signal. It is herein specially pointed out that in the embodiments of the present invention, a standard used by each operator is not limited, and the present invention is applicable no matter which standard is used by the operator. The technical solutions of the present invention may be applied to various communications systems, such as a Global System for Mobile Communications (Global System of Mobile communication, GSM), Code Division Multiple Access (CDMA, Code Division Multiple Access) system, Wideband Code Division Multiple Access (WCDMA, Wideband Code Division Multiple Access Wireless), general packet radio service (GPRS, General Packet Radio Service), and Long Term Evolution (LTE, Long Term Evolution).

A base station may be a base transceiver station (BTS, Base Transceiver Station) in a GSM or CDMA, or may be a NodeB (NodeB) in WCDMA, or may be an evolved NodeB (eNB or e-Node B, evolved NodeB) in LTE, which is not limited in the present invention.

In the present invention, a frequency refers to a transmit frequency of a radio signal, including a frequency band used for an uplink signal sent by user equipment (UE, or referred to as a mobile station) to a base station, and a frequency band used for a downlink signal sent by a base station to user equipment. For example, in a GSM, an operating frequency band of a GSM 900 is 890-960 MHz, and an operating frequency band of a GSM 1800 is 1710-1880 MHz, where Uplink (an uplink frequency band of a signal sent by a mobile station to a base station) is: for the GSM 900, 890-915 MHz, and for the GSM 1800, 1710-1785 MHz; Downlink (a downlink frequency band of a signal sent by a base station to a mobile station) is: for the GSM 900, 935-960 MHz, and for the GSM 1800, 1805-1880 MHz.

A frequency channel number is a serial number allocated to a fixed frequency. For example, a channel separation between frequency channel numbers in use may be 200 KHz. In this way, in a GSM, an uplink frequency band of the GSM 900 may be divided into 125 radio frequency bands according to the channel separation of 200 KHz: 890 MHz, 890.2 MHz, 890.4 MHz, 890.6 MHz, 890.8 MHz, 891 MHz, ..., 915 MHz, and each frequency band may be numbered, ranging from 1 to 2, 3, 4, ..., 125. The serial numbers of the fixed frequencies are the frequency channel numbers mentioned above. Conversely, a frequency channel number is a serial number of a fixed frequency. In a GSM network, a frequency channel number may be used to replace a frequency to specify transmit frequencies of a group of transceivers. For example, it is specified that a frequency channel number of a carrier is 3, that is, the carrier will receive an uplink signal whose frequency is 890.4 MHz and transmit a signal at a frequency of 935.4 MHz. Multiple frequency channel numbers of a same frequency band are allocated to different operators. For example, in China, frequency channel numbers 1-94 belong to China Mobile, frequency channel numbers 96-124 belong to China Unicom, and a frequency channel number 95 is reserved for differentiation between the two operators.

FIG. 2 is a structural diagram of a system according to an embodiment of the present invention. As shown in FIG. 2, the system mainly includes an RDCU and an active antenna. The RDCU may be configured to connect to radio frequency modules of base stations of multiple operators. In FIG. 2, three operators are used as an example: a radio frequency module A, a radio frequency module B, and a radio frequency module C. The RDCU and the active antenna may be connected by using a fiber, or connected by using other means such as a high-speed cable. The radio frequency modules may be connected to the RDCU by using a radio frequency cable, a feeder, and the like.

An active antenna is used in this embodiment of the present invention, and the active antenna may set a signal transmitting parameter for different frequencies, so that signals of different frequencies can be transmitted by using different beams. The signal transmitting parameter is a parameter related to a beam when the active antenna transmits a signal, and may include at least one of the following parameters: an antenna tilt angle, an azimuth, and a beam shape. The beam shape involved in the present invention may primarily include a beam width (namely, a beam width). Different parameter settings correspond to different beam forming manners, which are described in detail later.

As shown in FIG. 3, a processing process of a downlink signal may include:
Step 301: Convert, by using an RDCU, radio frequency signals that come from radio frequency modules of at least two operators and have corresponding air interface frequencies into digital signals, that is, perform analog-to-digital conversion, and then send digital signals of multiple radio frequency modules of a same sector (sector) to a same active antenna, where each operator corresponds to a different air interface frequency.

Specifically, the digital signals transmitted between the RDCU and the active antenna are baseband signals. That is, by using the RDCU, the radio frequency signals that come from the radio frequency modules of the at least two operators are converted into the baseband signals, that is, analog-to-digital conversion and down-conversion processing are performed, and then the baseband signals of multiple radio frequency modules of the same sector (sector) are sent to the same active antenna.

Because a base station antenna is used to form a beam, so as to form sector coverage at an angle, where the sector coverage formed by the antenna may be referred to as a sector of the antenna. Generally, an angle of the sector coverage formed by the antenna is 120 degrees, and omni-directional coverage includes three sectors.

Specifically, the RDCU may perform analog-to-digital conversion on a downlink radio frequency signal that comes from each radio frequency module to convert the downlink radio frequency signal into a digital signal (before the analog-to-digital conversion, down-conversion processing may be performed on the radio frequency signal), and then perform down-conversion, digital filtering and IQ (in-phase quadrature, In-phase Quadrature) signal extraction on the digital signal; and perform scheduling and framing on IQ signals of the same sector, so as to combine the digital signals of the multiple radio frequency modules of the same sector. A specific structure of the RDCU is described in detail in subsequent embodiments.

Generally, a correspondence exists between the radio frequency module and the sector, that is, the radio frequency module may be responsible for sending radio frequency signals of a specific operator in a specific sector.

There may be multiple manners in which the RDCU determines a radio frequency module that sends the received radio frequency signal, and a sector to which the signal needs to be sent, which may be designed according to system requirements. The correspondence between the radio frequency module and the sector may be used as a basis of determining, and the correspondence may be embodied diversely. For example, by using an identifier of a radio frequency module that receives the signal (or an identifier of an interface corresponding to the radio frequency module), or by searching for a correspondence between the radio frequency module and the sector (or a correspondence between the interface corresponding to the radio frequency module and the sector), the sector to which the signal needs to be sent is determined; or the sector corresponding to the signal may be determined by using cell information carried in the radio frequency signal received by the RDCU and sent by the radio frequency module, where the cell information may specifically include a cell identifier (such as a cell ID (identifier, identifier)). The RDCU may acquire corresponding sector information according to corresponding sector information included in each piece of cell information to determine the sector to which the radio frequency signal needs to be sent, or the sector to which the radio frequency signal needs to be sent may be determined by using the RDCU according to the correspondence between the cell identifier and the sector. Specifically, the correspondence between the radio frequency module and the sector may be configured by using a configuration module connected to the RDCU. The configuration module connected to the RDCU may be a network management system, such as an operating and maintenance center (OMC, Operating and Maintenance Center) or a local maintenance terminal (LMT, Local Maintenance Terminal). The correspondence between the radio frequency module and the sector may also be built in the RDCU in a production process.

The baseband signal (IQ signal) into which the radio frequency signal is converted may still carry the cell information. The cell information may include a cell identifier, and may further include frequency channel number information. After receiving the IQ signal, the active antenna may perform corresponding processing (for example, convert a frequency of the IQ signal into a frequency of a corresponding frequency channel number) on the IQ signal according to the frequency channel number information. The cell information may also include no frequency channel number information, and after receiving the IQ signal, the active antenna may determine the frequency channel number information of the corresponding IQ signal according to the correspondence between the cell identifier and the frequency channel number information, thereby performing corresponding processing on the IQ signal. When being transmitted from a baseband (digital) part to a radio frequency part (TRX) of the active antenna, different IQ signals may be transmitted through a digital interface such as a CPRI interface between a baseband part and a radio frequency part after being scheduled and framed. Specifically, a quantity of digital interfaces may be determined according to actual requirements. A correspondence in transmission, of information about each IQ signal, between interfaces, for example, a rule of placing each IQ signal in a frame structure, may be transmitted by a control part (such as control information, which may be information in a control frame) from the baseband part to the radio frequency part, so that after receiving the information about each IQ signal, the radio frequency part can still obtain the information about different IQ signals by means of deframing. In addition, further, according to the obtained frequency channel number information corresponding to different IQ signals, the information about different IQ signals may be sent into different logical resources for processing. The different logical resources mentioned herein may include one or more of a beam forming resource, a frequency conversion resource, a power amplification resource, and the like.

Step 302: Perform at least one of vertical beam forming processing and horizontal beam forming processing on received digital signals (which may be specifically baseband signals) by using the active antenna according to a signal transmitting parameter that is set for each operator, and then convert processed digital signals into radio frequency signals and transmit the radio frequency signals from an air interface. The frequency of the radio frequency signal transmitted from an air interface is an air interface frequency of each corresponding operator. That is, the RDCU and the active antenna perform conversion from a radio frequency signal to a baseband signal and then conversion from a baseband signal to a radio frequency signal on the radio frequency signal that is originally output by the radio frequency module of each operator. In the conversion process, the signal transmitting parameter is adjusted independently for the beam of each operator, but the air interface frequency of the radio frequency signal that originally needs to be sent does not change.

The active antenna has a feature, which can enable signal transmitting parameter setting for different frequency channel numbers. Because the signal frequency used by each operator is different, signal transmitting parameter setting of the frequency channel number corresponding to each operator can be performed for the active antenna beforehand. Herein, the signal transmitting parameter setting may be performed in the RDCU by using the network management system. Specifically, the setting may be performed for the IQ signal corresponding to each operator, or performed for the frequency channel number used by each operator. After the setting is completed, the RDCU sends set information to the active antenna through the digital interface, so that the active antenna may perform, according to the set information, required processing on the IQ signal corresponding to each operator. Certainly, the signal transmitting parameter of the frequency channel number corresponding to each operator may also be built in the active antenna.

After receiving the baseband signal (IQ signal) of each operator, the active antenna may perform at least one of vertical beam forming processing and horizontal beam forming processing on the baseband signal of each operator according to the frequency channel number (frequency) information corresponding to the baseband signal and the signal transmitting parameter that is set for each operator. For the obtaining of the frequency channel number (frequency) information corresponding to the baseband signal, reference may be made to the description in the step 301, which is not described herein again.

The active antenna can provide a function of vertical beam forming processing and horizontal beam forming processing, where the vertical beam forming processing is primarily as follows: A transceiver (TRX) channel of the active antenna collaborates with an antenna element in a vertical direction of the antenna to generate a beam in the vertical direction of the antenna. Specifically, the beam in the vertical direction of the antenna may be changed by adjusting a weight of an antenna tilt angle for each TRX channel, for example, beam forming processing such as changing a beam split or a beam form (which refers to processing on a single beam characteristic herein). The setting of the weight for the TRX channel may be referred to as setting of a digital beam forming (DBF, Digital Beam Forming) parameter. Based on the description above, the active antenna may set a corresponding DBF parameter according to the antenna tilt angle that is set for each operator, so that an independent adjustment on the antenna tilt angle of the beam of each operator can be implemented, and the beam of a different operator can have a different antenna tilt angle.

The horizontal beam forming processing is primarily as follows: A TRX channel of the active antenna collaborates with an antenna element in a horizontal direction of the antenna to generate a beam in the horizontal direction of the antenna. Specifically, an azimuth and a beam shape of the beam in the horizontal direction of the antenna may be changed by adjusting a weight of an antenna azimuth or a beam width for each TRX channel. Likewise, the setting of the weight for the TRX channel may also be referred to as DBF parameter setting. Because the adjustment of the beam in the horizontal direction can be implemented only by using multiple arrays (at least two arrays) of antenna elements, the active antenna needs to use a combination of multiple arrays of antenna elements, for example, a combination of 4 arrays of antenna elements or a combination of more antenna elements. The active antenna may set a corresponding DBF parameter according to the antenna azimuth or beam width that is set by each operator, so that an independent adjustment on at least one of the antenna azimuth and the beam width of the beams of different operators can be implemented, the beam of each operator can have a different antenna azimuth or beam width, and a beam split of different operators in the horizontal direction can be further implemented. The beam width is an abbreviation of a width of a beam or a width of a lobe, and includes a horizontal beam width or a vertical beam width. In this embodiment of the present invention, the processing is performed for horizontal beam forming, and therefore, the beam width may refer to a horizontal beam width. After performing at least one of the vertical beam forming processing and the horizontal beam forming processing, the active antenna can transmit the obtained radio frequency signal of each radio frequency module by using a different beam. A specific type of processing to be used by the active antenna may be determined according to the DBF parameter that is set by the operator. If the operator sets only an antenna tilt angle, only vertical beam forming processing is performed on the digital signal corresponding to the radio frequency module of the operator; if the operator sets only an antenna azimuth or a beam width, only horizontal beam forming processing is performed on the digital signal corresponding to the radio frequency module of the operator; if the operator sets both an antenna tilt angle and an antenna azimuth or a beam width, both vertical beam forming processing and horizontal beam forming processing are performed on the digital signal corresponding to the radio frequency module of the operator.

Processing on an uplink signal is basically an inverse process of the processing on a downlink signal. For the description of steps or principles involved in the processing on an uplink signal, reference may be made to the description of the processing on a downlink signal.

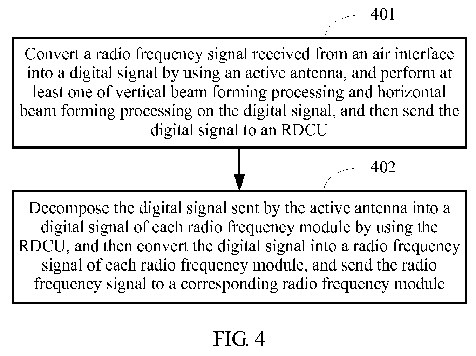

As shown in FIG. 4, the processing on an uplink signal may include:
Step 401: Convert a radio frequency signal received from an air interface into a digital signal (which may be specifically a baseband signal) by using an active antenna, and perform at least one of vertical beam forming processing and horizontal beam forming processing on the digital signal (which may be specifically a baseband signal), and then send the digital signal to an RDCU. The radio frequency signal received from the air interface includes radio frequency signals that are of at least two operators and have corresponding air interface frequencies, and each operator corresponds to a different air interface frequency.

Likewise, a feature of the active antenna is used herein, which enables signal transmitting parameter setting for different frequency channel numbers. Because the signal frequency channel number used by each operator is different, the active antenna can perform signal transmitting parameter setting of the frequency corresponding to each operator beforehand.

The active antenna may determine frequency channel number information of the radio frequency signal received from the air interface, or may determine cell information of the radio frequency signal. Therefore, the frequency channel number of the baseband signal into which the radio frequency signal is converted may be determined according to the frequency channel number information of the radio frequency signal; or, the frequency channel number of the baseband signal into which the radio frequency signal is converted may be determined according to a cell identifier included in the cell information of the radio frequency signal and a correspondence between the cell identifier and the frequency channel number information. In this way, the active antenna can differentiate the radio frequency signal from the baseband signal obtained by means of conversion, and perform different processing according to the setting for each operator.

For the processing on an uplink signal, if the operator sets the antenna tilt angle, the performing, by the active antenna, vertical beam forming processing on the digital signal obtained by means of conversion specifically includes: setting a corresponding DBF parameter according to the antenna tilt angle that is set for each operator, so that an independent adjustment on the antenna tilt angle of a beam of each operator can be implemented, the beam of each operator can have a different antenna tilt angle, and the active antenna can receive radio frequency signals of different operators by using different antenna tilt angles. The setting a DBF parameter herein refers to adjusting a weight of the antenna tilt angle for a TRX channel that generates a beam in the vertical direction of the antenna.

If the operator sets the antenna azimuth or the beam width, the performing, by the active antenna, horizontal beam forming processing on the digital signal obtained by means of conversion specifically includes: setting a corresponding DBF parameter according to the antenna azimuth or the beam width that is set for each operator, so that an independent adjustment on at least one of the antenna azimuth and the beam width of the beam of each operator can be implemented, and the active antenna can receive radio frequency signals of different operators by using different antenna azimuths or beam widths. The setting a DBF parameter herein refers to adjusting a weight of the antenna azimuth or the beam width for a TRX channel that generates a beam in the horizontal direction of the antenna.

Step 402: Decompose the digital signal (which may be specifically a baseband signal) sent by the active antenna into a digital signal of each radio frequency module by using the RDCU, and then convert the digital signal into a radio frequency signal of each radio frequency module, and send the radio frequency signal to a corresponding radio frequency module.

Likewise, for the processing on the uplink signal, the RDCU performs an inverse processing of the step 301, that is, deframes the digital signal sent by the active antenna to separate out an IQ signal, and then performs up-conversion on the IQ signal to convert the IQ signal into a radio frequency signal by means of analog-to-digital conversion, and sends each radio frequency signal to a corresponding radio frequency module.

Specifically, there may be multiple manners in which the RDCU determines a frequency of a signal into which the baseband signal received from the active antenna needs to be converted, or a radio frequency module to which the signal needs to be sent, which may be designed according to system requirements. The frequency channel number information and the correspondence between the radio frequency module and the sector may be used as a basis of determining, and the correspondence may be embodied diversely. For example, a radio frequency module to which the signal needs to be sent may be determined by using an identifier of a sector (or an active antenna) that receives the baseband signal (or an identifier of an interface corresponding to the sector (or the active antenna)) and according to the correspondence between the radio frequency module and the sector (or the active antenna) and the frequency channel number information of the baseband signal. The frequency channel number information of the baseband signal may be determined according to the cell information carried in the baseband signal received by the RDCU. Specifically, the cell information may include a cell identifier (such as a cell ID (identifier, identifier)). The RDCU may acquire corresponding frequency channel number information according to the corresponding frequency channel number information included in each piece of cell information, or the radio frequency module to which the baseband signal needs to be sent may be determined by using the RDCU according to the correspondence between the cell identifier and the frequency channel number. Specifically, the correspondence between the radio frequency module and the sector and the correspondence between the cell identifier and the frequency channel number may be configured by using a configuration module connected to the RDCU. The configuration module connected to the RDCU may be a network management system, such as an operating and maintenance center (OMC, Operating and Maintenance Center) or a local maintenance terminal (LMT, Local Maintenance Terminal). The correspondence between the radio frequency module and the sector may also be built in the RDCU in a production process.

FIG. 2 is a system structure for one sector. Finally, after signals of three radio frequency modules corresponding to the one sector (because the radio frequency modules belong to different operators, they may be generally three radio frequency modules physically) undergo the process shown in FIG. 3, one active antenna then sends the signals by using three different beams. Assuming that three sectors exist, a quantity of required antennas is reduced from 9 in the prior art to 3 active antennas in this embodiment of the present invention.

The combining of signals by the RDCU is performed for a same sector, and digital signals of multiple radio frequency modules of the same sector are combined and then sent to one active antenna. Therefore, in general cases, if N sectors exist, the quantity of the active antennas should also be N. The quantity of active antennas herein is measured by one set of TRXs and antenna elements, and is the same as a quantity of sets of TRXs plus antenna elements.

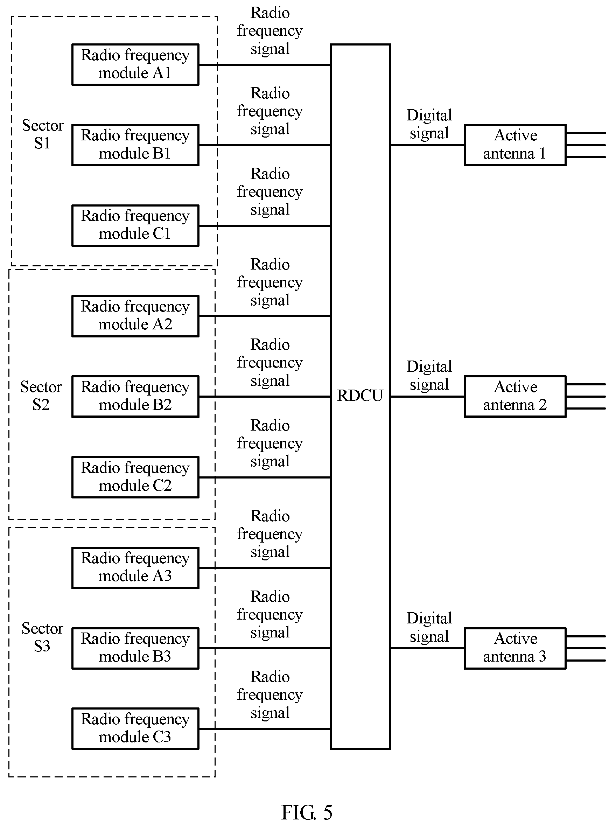

Further, using the system shown in FIG. 5 as an example, assuming that 3 sectors S1, S2, and S3 exist and each operator has a same frequency channel number in the 3 sectors, each operator needs to use a radio frequency module corresponding to each sector to process signals of different sectors of each operator. In this way, the three operators A, B, and C have 9 radio frequency signals, which are sent by 9 radio frequency modules respectively. A radio frequency module A1 in FIG. 5 represents a radio frequency module of a base station of an operator A in the sector S 1, and meanings of other radio frequency modules are similar.

In FIG. 5, the radio frequency signals sent from the radio frequency modules A1, B1, and C1 of the sector S1, the radio frequency modules A2, B2, and C2 of the sector S2, and the radio frequency modules A3, B3, and C3 of the sector S3 are all sent to the RDCU. After performing analog-to-digital conversion on the radio frequency signal of each radio frequency module to obtain a digital signal of each radio frequency module, the RDCU sends the digital signals corresponding to the radio frequency modules A1, B1, and C1 of the sector S1 to the active antenna 1, sends the digital signals corresponding to the radio frequency modules A2, B2, and C2 of the sector S2 to the active antenna 2, and sends the digital signals corresponding to the radio frequency modules A3, B3, and C3 of the sector S3 to the active antenna 3. The active antenna 1, the active antenna 2, and the active antenna 3 may then separately perform processing on the signal of each operator according to a signal transmitting parameter that is set by the operator, where the processing herein may include: performing at least one of corresponding vertical beam forming processing and horizontal beam forming processing on the signal of each frequency of the received digital signals according to the signal transmitting parameter that is set for the signal frequency corresponding to each operator, and then performing processing such as digital-to-analog conversion and frequency conversion, so that the radio frequency signal of each radio frequency module can be transmitted by using a different beam. That is, the active antenna 1 transmits the radio frequency signals of the radio frequency modules A1, B1, and C1 by using different beams, the active antenna 2 transmits the radio frequency signals of the radio frequency modules A2, B2, and C2 by using different beams, and the active antenna 3 transmits the radio frequency signals of the radio frequency modules A3, B3, and C3 by using different beams.

However, for the system shown in FIG. 5, each sector needs to correspond to a different radio frequency module, which leads to occupation of more device resources to some extent. An embodiment of the present invention herein further provides a preferred implementation manner, in which different sectors of a same operator can share one radio frequency module by adding a frequency converting unit.

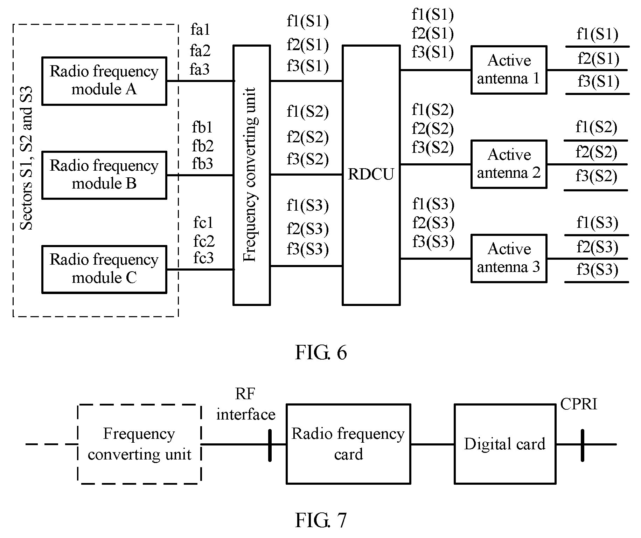

In this case, in order to share a radio frequency module between different sectors of a same operator, the system may be implemented as shown in FIG. 6, in which sectors S1, S2, and S3 share a radio frequency module A, a radio frequency module B, and a radio frequency module C. In order to enable different sectors to share a radio frequency module, when the radio frequency module processes and sends signals of different sectors of a same operator, the signals may be differentiated with respect to a frequency. A signal frequency of radio frequency signal transmitting in each sector is herein referred to as a sector frequency, but each operator finally needs to use an air interface frequency to send signals over an air interface. In this embodiment of the present invention, conversion from a sector frequency into an air interface frequency may be completed by using the frequency converting unit. The air interface frequency herein refers to a frequency of a signal transmitted by the antenna. An example of a specific process is as follows:
The radio frequency module A processes and sends a radio frequency signal of the base station of the operator A in the sector S1 at a frequency fa1, a radio frequency signal of the base station of the operator A in the sector S2 at a frequency fa2, and a radio frequency signal of the base station of the operator A in the sector S3 at a frequency fa3; the radio frequency module B processes and sends a radio frequency signal of the base station of the operator B in the sector S1 at a frequency fb1, a radio frequency signal of the base station of the operator B in the sector S2 at a frequency fb2, and a radio frequency signal of the base station of the operator B in the sector S3 at a frequency fb3; and the radio frequency module C processes and sends a radio frequency signal of the base station of the operator C in the sector S1 at a frequency fc1, a radio frequency signal of the base station of the operator C in the sector S2 at a frequency fc2, and a radio frequency signal of the base station of the operator C in the sector S3 at a frequency fc3.

It is assumed that the active antenna 1 is responsible for transmitting the radio frequency signal of the sector S1, the active antenna 2 is responsible for transmitting the radio frequency signal of the sector S2, the active antenna 3 is responsible for transmitting the radio frequency signal of the sector S3, an air interface frequency used by the operator A is f1, an air interface frequency used by the operator B is f2, and an air interface frequency used by the operator C is f3. Therefore, a correspondence between a sector frequency and an air interface frequency may be configured in the frequency converting unit beforehand, or the correspondence between a sector frequency and an air interface frequency may be sent to or configured in the frequency converting unit by using the configuration module such as a network management system, where the sector frequency herein refers to an original frequency of the radio frequency signal sent by the radio frequency module of each sector. The frequency converting unit may specifically perform the following operations:
Processing on a downlink signal is as follows: The frequency converting unit receives radio frequency signals that come from radio frequency modules of a same operator, where the radio frequency modules of the same operator are configured to process and output radio frequency signals corresponding to different sectors, and a frequency of a radio frequency signal (namely, sector frequency) corresponding to each sector is different from that of another; converts the frequency of the radio frequency signal into a corresponding air interface frequency according to the correspondence between a sector frequency and an air interface frequency, and sends each radio frequency signal whose frequency is converted to the RDCU. The correspondence between a sector frequency and an air interface frequency may be preconfigured in the frequency converting unit. For example, a manner in which the correspondence is written into software of the frequency converting unit (namely, a built-in manner in a production process) may be used, or configuration may be performed in the frequency converting unit by using the configuration module such as a network management system.

The frequency converting unit converts fa1, fa2, and fa3 into f1(Sl), f1(S2), and f1(S3) respectively. It should be noted that values of the three frequencies f1(S1), f1(S2), and f1(S3) are all f1, where the brackets are intended to represent corresponding sectors. Specifically, the signals corresponding to different sectors may still be differentiated in multiple manners, for example, by carrying cell information or sector information, or according to a correspondence between a sector frequency and a sector, so as to differentiate sectors. After fb1, fb2, and fb3 are converted into f2(S1), f2(S2), and f2(S3) respectively and fc1, fc2, and fc3 are converted into f3(S1), f3(S2), and f3(S3) respectively, each radio frequency signal whose frequency is converted is sent to the RDCU, and then the RDCU converts each radio frequency signal into a digital signal and then sends multiple digital signals of a same sector to a corresponding active antenna. That is, f1(S1), f2(S1), and f3(S1) are sent to the active antenna 1, f1(S2), f2(S2), and f3(S2) are sent to the active antenna 2, and f1(S3), f2(S3), and f3(S3) are sent to the active antenna 3. All the radio frequency signals are grouped based on sectors, which may be completed in the RDCU. In this case, functions of the RDCU are the same as those when the RDCU is directly connected to the radio frequency module of each operator in the foregoing embodiment, and the RDCU may complete sector-based grouping according to the cell information or sector information carried in the received radio frequency signal. In another implementation manner, the sector-based grouping of the radio frequency signals may also be completed in the frequency converting unit, and the RDCU converts radio frequency signals of a same sector into baseband signals, and sends the baseband signals to an active antenna corresponding to the corresponding sector. The sector-based grouping of the radio frequency signals may be implemented in the frequency converting unit according to the correspondence between a sector frequency and a sector. The correspondence may be built in the production process, or may be configured by using a configuration module such as a network management system.

It should be noted that no necessary relationship exists between fa1, fb1, and fc1 of the foregoing radio frequency signals. They may be frequencies that are set by the radio frequency module inside the radio frequency module, so as to perform processing on the signals of different sectors by using one radio frequency module. However, in order to send the signals over an air interface, it is necessary to differentiate an air interface frequency of each operator over the air interface, that is, the frequency used by each operator for sending the signal.

Processing on an uplink signal is as follows: The frequency converting unit receives a radio frequency signal from the RDCU, and converts a frequency of the radio frequency signal into a frequency of a corresponding sector according to the correspondence between a sector frequency and an air interface frequency, and then sends radio frequency signals of different sectors of a same operator to corresponding radio frequency modules, which is an inverse process of processing on a downlink signal. Specifically, for the obtaining of the correspondence and how to determine a sector from which a radio frequency signal is received (that is, finally determine a sector frequency into which a frequency of the received radio frequency signal needs to be converted), reference may be made to the description of the processing on a downlink signal. For example, the correspondence may be built beforehand, or may be obtained by using a configuration module; the sector from which the radio frequency signal is received may be determined according to cell information or sector information carried in the radio frequency signal or an identifier of a sending interface of the RDCU (in this case, the signals sent by the RDCU to the frequency converting unit are grouped based on sectors, and according to a correspondence between a radio frequency module and a sector, the RDCU sends, to the frequency converting unit, the radio frequency signals that are grouped based on sectors). For such content, reference may be made to manners in the prior art.

It may be learned that, a frequency converting unit may be added so that the frequency converting unit converts a frequency of signals of different sectors of a same operator into an air interface frequency of the operator, and therefore, different sectors can share one radio frequency module. The sector frequency is configured for signals of different sectors of each operator in a user-defined manner, and after the frequency converting unit performs frequency conversion, the frequency of the signals can still be converted into the air interface frequency corresponding to the operator, thereby finally completing sending over the air interface. This manner reduces a quantity of radio frequency modules of the same operator geometrically and saves device resources significantly.

It may be understood that the foregoing example is described by using an example in which the technical solution provided in this embodiment of the present invention is applied to each sector. In specific implementation, however, one or more sectors (at least two sectors) in multiple sectors at one site may be optimized according to requirements by using the technical solution provided in this embodiment of the present invention; or one or more of multiple operators at one site may be optimized according to requirements by using the technical solution provided in this embodiment of the present invention.

The following description puts an emphasis on a structure of an RDCU in the system. FIG. 7 is a schematic structural diagram of an RDCU according to the foregoing embodiment of the present invention. As shown in FIG. 7, the RDCU primarily consists of a radio frequency card and a digital card. The radio frequency card provides a radio frequency (RF, Radio Frequency) interface, and is connected to a radio frequency module or a frequency converting unit of a base station by using the RF interface. The digital card may provide a digital interface to connect to an active antenna. The digital interface may be based on a common public radio interface (CPRI, Common Public Radio Interface) protocol or based on the Open Base Station Architecture Initiative (OBSAI, Open Base Station Architecture Initiative) protocol.

Processing performed by the radio frequency card on a downlink signal is as follows: converting radio frequency signals that come from radio frequency modules of at least two operators (the radio frequency signals may be received from the radio frequency modules directly or sent by the frequency converting unit) into baseband signals, and providing the baseband signals for the digital card. Specifically, the radio frequency card performs analog-to-digital conversion on the radio frequency signals that come from the radio frequency modules to convert the radio frequency signals into baseband signals. This process may include: performing down-conversion processing on the radio frequency signals before the analog-to-digital conversion and then performing down-conversion, digital filtering and IQ signal extraction on the digital signals.

Processing performed by the digital card on a downlink signal is as follows: sending baseband signals of multiple radio frequency modules of a same sector to a same active antenna. Specifically, the digital card may perform scheduling and framing on IQ signals of a same sector in the baseband signals provided by the radio frequency card, that is, combine the baseband signals of the multiple radio frequency modules of the same sector so as to send the baseband signals of the multiple radio frequency modules of the same sector to the same active antenna. Processing performed by the digital card on an uplink signal is as follows: decomposing a baseband signal sent by an active antenna into a baseband signal of each radio frequency module, and then providing the baseband signal for the radio frequency card. Specifically, the digital card may deframe the baseband signal sent by the active antenna to separate out an IQ signal.

Processing performed by the radio frequency card on an uplink signal is as follows: converting a baseband signal of each radio frequency module into a radio frequency signal, and then sending the radio frequency signal to a corresponding radio frequency module separately (the radio frequency signal may be sent to each radio frequency module directly or sent to the radio frequency module by using the frequency converting unit). Specifically, after performing up-conversion on the IQ signal provided by the digital card, the radio frequency card performs analog-to-digital conversion to convert the IQ signal into a radio frequency signal, and sends the radio frequency signal to a corresponding radio frequency module.

The radio frequency and digital conversion unit is further configured to communicate with (including being physically connected to) a configuration module such as a network management system, and is further configured to receive, from the network management system, a signal transmitting parameter that is set for each operator, and send the signal transmitting parameter to the active antenna. The radio frequency and digital conversion unit may further include:
a subunit that is configured to receive, from the network management system, the signal transmitting parameter that is set for each operator, and send the signal transmitting parameter to the active antenna.

The involved uplink signal and downlink signal may both carry cell information. For a downlink signal (which may be a radio frequency signal or a baseband signal), the digital card or the radio frequency card may match a radio frequency module to a sector for a corresponding downlink signal according to sector information included in cell information or a correspondence between cell information and sector information; for an uplink signal (which may be a radio frequency signal or a baseband signal), the digital card or the radio frequency card may match a sector to a radio frequency module for a corresponding uplink signal according to a correspondence between sector information and a radio frequency module, frequency channel number information included in cell information, or a correspondence between cell information and sector information.

When the RDCU is connected to the frequency converting unit or a built-in frequency converting unit (which will be described in subsequent embodiments), the frequency converting unit may implement sector-based grouping of downlink signals, or match a sector to a radio frequency module for the uplink signal. In this case, the RDCU only needs to perform corresponding processing on the uplink signal or the downlink signal based on sectors.

The processing performed by the digital card and the radio frequency card on the uplink signal and that on the downlink signal may be two different processes. That is, the radio frequency card and the digital card process the uplink signal in turn in the foregoing manners, or the digital card and the radio frequency card process the downlink signal in turn in the foregoing manners.

It may be understood that, the processing on the uplink signal and the processing on the downlink signal, which are described in this embodiment of the present invention, may be two different processes. An inverse relationship may exist between the two. A set of communications equipment such as a base station or a communications system may implement processing on an uplink signal and processing on a downlink signal simultaneously.

There may further be another implementation manner. That is, the frequency converting unit may be integrated in the RDCU. In this case, the RDCU further includes a frequency converting unit, and the frequency converting unit is connected to the RF interface of the radio frequency card and its functions are the same as the functions described in the foregoing embodiment. For a downlink signal: the frequency converting unit receives a radio frequency signal that comes from a radio frequency module, where the radio frequency module is configured to process and output radio frequency signals that are of a same operator and correspond to different sectors, and the radio frequency signals of each sector are differentiated by using different frequencies (herein referred to as a sector frequency); and converts a frequency of the radio frequency signals into a corresponding air interface frequency according to a correspondence between a sector frequency and an air interface frequency, and sends a radio frequency signal, whose frequency is converted, of each radio frequency module to the radio frequency card. For an uplink signal: the frequency converting unit receives a radio frequency signal sent by the radio frequency card, and converts a frequency of the radio frequency signal into a corresponding sector frequency according to a correspondence between a sector frequency and an air interface frequency, and then sends radio frequency signals of different sectors of a same operator to a same radio frequency module for processing.

It may be understood that, for specific steps or principles mentioned in the description of this structure, reference may be made to the description in the corresponding embodiment of the foregoing method.

From the foregoing description, it may be learned that the method and the system provided in the embodiments of the present invention have the following advantages:
(1) In the embodiments of the present invention, a radio frequency and digital conversion unit and an active antenna are used to implement antenna sharing between multiple operators. That is, radio frequency signals sent by radio frequency modules of multiple operators in a same sector can finally be transmitted by using a common active antenna.
(2) Each operator can set a signal transmitting parameter of an active antenna, for example, set a different antenna tilt angle, azimuth and beam width, and the active antenna performs at least one of vertical beam forming processing and horizontal beam forming processing so that each operator can perform network planning and network optimization independently.
(3) Device investments are reduced. Still further, a quantity of radio frequency modules in a multi-sector case can be reduced by using a frequency converting unit, which further reduces device investments. Using an example in which 3 operators share a site and a radio frequency signal is transmitted in 3 sectors, devices that need to be configured by each operator and conditions of shared devices between operators are compared between the prior art and the present invention, and the comparison is shown in Table 1. It can be learned that the quantity of radio frequency modules configured by each operator is reduced from 3 to 1, and a quantity of antennas in the 3 sectors is reduced from the former 9 to 3, which reduces device costs significantly and reduces load of towers. This implementation manner can separate shared devices and antennas out of the operator, and operators may, for example, entrust operation to a third-party tower company without installing or maintaining a system on a tower by themselves. A professional third-party tower company performs maintenance in a uniform manner, which expedites maximization of social efficiency.

**Table 1**

| | **Configuration of operator A** | **Configuration of operator B** | **Configuration of operator C** | **Shared devices** |
|---|---|---|---|---|
| Prior art | 3 radio frequency modules + 3 antennas | 3 radio frequency modules + 3 antennas | 3 radio frequency modules + 3 antennas | None |
| Technical solution in the present invention | 1 radio frequency module | 1 radio frequency module | 1 radio frequency module | 1 frequency converting unit + 1 RDCU + 3 AASs |

It may be understood that, mutual reference may be made between the foregoing embodiments of the present invention.

In the several embodiments provided in the present invention, it should be understood that the disclosed system, apparatus, and method may be implemented in other manners. For example, the system embodiment described above is merely exemplary. For example, the division of units is merely division of logical functions, and in practical implementation, the units may be divided in other manners.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A system for sharing an antenna between multiple operators, wherein the system comprises a radio frequency and digital conversion unit and an active antenna;
the radio frequency and digital conversion unit is configured to convert radio frequency signals that come from radio frequency modules of at least two operators into digital signals, and send digital signals of a same sector to an active antenna corresponding to the sector; and
the active antenna is configured to perform at least one of vertical beam forming processing and horizontal beam forming processing on received digital signals according to a signal transmitting parameter that is set for each operator, convert the processed digital signals into radio frequency signals of a corresponding air interface frequency, and then transmit the radio frequency signals from an air interface, wherein each operator corresponds to a different air interface frequency.

2. The system according to claim 1, wherein that the radio frequency and digital conversion unit is configured to send digital signals of a same sector to an active antenna corresponding to the sector specifically comprises the following: the radio frequency and digital conversion unit is configured to perform down-conversion, digital filtering, and in-phase quadrature IQ signal extraction on digital signals obtained by means of conversion, perform scheduling and framing on IQ signals of a same sector, and then send the IQ signals to an active antenna corresponding to the sector.

3. The system according to claim 1 or 2, wherein the signal transmitting parameter comprises an antenna tilt angle, and that the active antenna is configured to perform vertical beam forming processing on received digital signals specifically comprises: setting a corresponding digital beam forming DBF parameter according to an antenna tilt angle that is set for each operator, so that an independent adjustment on an antenna tilt angle of a beam of each operator can be implemented, wherein the setting a DBF parameter is to adjust a weight of the antenna tilt angle for a transceiver TRX channel that generates a beam in a vertical direction of the antenna.

4. The system according to any one of claims 1 to 3, wherein the signal transmitting parameter comprises an antenna azimuth or a beam width, and that the active antenna is configured to perform horizontal beam forming processing on received digital signals specifically comprises: setting a corresponding DBF parameter according to an antenna azimuth or a beam width that is set for each operator, so that an independent adjustment on at least one of an antenna azimuth and a beam width of a beam of each operator can be implemented, wherein the setting a DBF parameter is to adjust a weight of the antenna azimuth or the beam width for a TRX channel that generates a beam in a horizontal direction of the antenna.

5. The system according to any one of claims 1 to 4, wherein the radio frequency and digital conversion unit is further configured to receive, from a network management system, the signal transmitting parameter that is set for each operator, and send the signal transmitting parameter to the active antenna.

6. The system according to any one of claims 1 to 5, wherein the system further comprises a frequency converting unit disposed between a radio frequency module and the radio frequency and digital conversion unit; and
the frequency converting unit is configured to: receive a radio frequency signal that comes from a radio frequency module of at least one operator, wherein the radio frequency module of one operator of the at least one operator is configured to process and output radio frequency signals that are of a same operator and correspond to different sectors, and the radio frequency signals corresponding to different sectors are differentiated by using different sector frequencies; convert a frequency of the radio frequency signals into a corresponding air interface frequency according to a correspondence between a sector frequency and an air interface frequency, and send radio frequency signals whose frequency is converted to the radio frequency and digital conversion unit.

7. A system for sharing an antenna between multiple operators, wherein the system comprises a radio frequency and digital conversion unit and an active antenna;
the active antenna is configured to convert radio frequency signals that are received from an air interface and have at least two air interface frequencies into digital signals, and then perform at least one of vertical beam forming processing and horizontal beam forming processing on the digital signals according to a signal transmitting parameter that is set for each operator of at least two operators, and then send the digital signals to the radio frequency and digital conversion unit, wherein each operator corresponds to a different air interface frequency; and
the radio frequency and digital conversion unit is configured to decompose a digital signal sent by the active antenna into digital signals corresponding to radio frequency modules of at least two operators, and then convert the decomposed digital signals into radio frequency signals that correspond to the radio frequency modules of the at least two operators and have the corresponding air interface frequencies, and send the radio frequency signals to the corresponding radio frequency modules.

8. The system according to claim 7, wherein the signal transmitting parameter comprises an antenna tilt angle, and the performing, by the active antenna, vertical beam forming processing on the digital signals obtained after conversion specifically comprises: setting a corresponding digital beam forming DBF parameter according to an antenna tilt angle that is set for each operator, so that an independent adjustment on an antenna tilt angle of a beam of each operator can be implemented, wherein the setting a DBF parameter is to adjust a weight of the antenna tilt angle for a TRX channel that generates a beam in a vertical direction of the antenna.

9. The system according to claim 7 or 8, wherein the signal transmitting parameter comprises an antenna azimuth or a beam width, and the performing, by the active antenna, horizontal beam forming processing on the digital signals obtained after conversion specifically comprises: setting a corresponding DBF parameter according to an antenna azimuth or a beam width that is set for each operator, so that an independent adjustment on at least one of an antenna azimuth and a beam width of a beam of each operator can be implemented, wherein the setting a DBF parameter is to adjust a weight of the antenna azimuth or the beam width for a TRX channel that generates a beam in a horizontal direction of the antenna.

10. The system according to claim 7, 8 or 9, wherein the radio frequency and digital conversion unit is specifically configured to: deframe a digital signal sent by the active antenna to separate out in-phase quadrature IQ signals of at least two operators, and then perform up-conversion and digital-to-analog conversion on the IQ signals to convert the IQ signals into radio frequency signals, and send the radio frequency signals obtained by means of conversion to corresponding radio frequency modules.

11. The system according to any one of claims 7 to 10, wherein the radio frequency and digital conversion unit is further configured to receive, from a network management system, the signal transmitting parameter that is set for each operator, and send the signal transmitting parameter to the active antenna.

12. The system according to any one of claims 7 to 11, wherein the system further comprises a frequency converting unit disposed between a radio frequency module and the radio frequency and digital conversion unit; and
the frequency converting unit is configured to: receive a radio frequency signal sent by the radio frequency and digital conversion unit, convert a frequency of the radio frequency signal into a corresponding sector frequency according to a correspondence between a sector frequency and an air interface frequency, and then send radio frequency signals of different sectors of a same operator to corresponding radio frequency modules, wherein the radio frequency module of one operator in the at least two operators is configured to receive and process radio frequency signals corresponding to different sectors, and the radio frequency signals corresponding to different sectors are differentiated by using different sector frequencies.

13. A radio frequency and digital conversion unit, wherein the radio frequency and digital conversion unit comprises a radio frequency card and a digital card;
the radio frequency card is configured to convert radio frequency signals that come from radio frequency modules of at least two operators and have corresponding air interface frequencies into digital signals, and then provide the digital signals for the digital card, wherein each operator corresponds to a different air interface frequency; and
the digital card is configured to send digital signals of a same sector to an active antenna corresponding to the sector.

14. The radio frequency and digital conversion unit according to claim 13, wherein the radio frequency card is specifically configured to: perform analog-to-digital conversion on the radio frequency signals that come from each radio frequency module of the at least two operators to convert the radio frequency signals into digital signals, and then perform down-conversion, digital filtering and in-phase quadrature IQ signal extraction on the digital signals; and
the digital card is specifically configured to perform scheduling and framing on IQ signals of a same sector and then send the IQ signals to an active antenna corresponding to the sector.

15. The radio frequency and digital conversion unit according to claim 13 or 14, wherein the radio frequency and digital conversion unit further comprises:
a subunit that is configured to receive, from a network management system, a signal transmitting parameter that is set for each operator, and send the signal transmitting parameter to the active antenna.

16. The radio frequency and digital conversion unit according to any one of claims 13 to 15, wherein the radio frequency and digital conversion unit further comprises a frequency converting unit; and
the frequency converting unit is configured to: receive a radio frequency signal that comes from a radio frequency module of at least one operator, wherein the radio frequency module of the at least one operator is configured to process and output radio frequency signals that are of a same operator and correspond to different sectors, and the radio frequency signals corresponding to different sectors are differentiated by using different sector frequencies; convert a frequency of the radio frequency signals into a corresponding air interface frequency according to a correspondence between a sector frequency and an air interface frequency, and send radio frequency signals whose frequency is converted to the radio frequency card.

17. A radio frequency and digital conversion unit, wherein the radio frequency and digital conversion unit comprises a radio frequency card and a digital card;
the digital card is configured to decompose a digital signal sent by an active antenna into digital signals corresponding to radio frequency modules of at least two operators; and
the radio frequency card is configured to convert the decomposed digital signals into radio frequency signals that correspond to at least two operators and have corresponding air interface frequencies, and send the radio frequency signals to corresponding radio frequency modules, wherein each operator corresponds to a different air interface frequency.

18. The radio frequency and digital conversion unit according to claim 17, wherein the digital card is specifically configured to deframe a digital signal sent by the active antenna to separate out in-phase quadrature IQ signals corresponding to at least two operators; and
the radio frequency card is specifically configured to perform up-conversion and digital-to-analog conversion on the IQ signals to convert the IQ signals into radio frequency signals, and send the radio frequency signals to corresponding radio frequency modules.

19. The radio frequency and digital conversion unit according to claim 17 or 18, wherein the radio frequency and digital conversion unit further comprises:
a subunit that is configured to receive, from a network management system, a signal transmitting parameter that is set for each operator, and send the signal transmitting parameter to the active antenna.

20. The radio frequency and digital conversion unit according to any one of claims 17 to 19, wherein the radio frequency and digital conversion unit further comprises a frequency converting unit, configured to: receive a radio frequency signal sent by the radio frequency card, convert a frequency of the radio frequency signal into a corresponding sector frequency according to a correspondence between a sector frequency and an air interface frequency, and then send radio frequency signals of different sectors of a same operator to a same radio frequency module, wherein the radio frequency module is configured to receive and process radio frequency signals that are of a same operator and correspond to different sectors, and the radio frequency signals corresponding to different sectors are differentiated by using different sector frequencies.

21. A method for sharing an antenna between multiple operators, wherein the method comprises:
converting radio frequency signals into digital signals by using a radio frequency and digital conversion unit, wherein the radio frequency signals come from radio frequency modules of at least two operators and have corresponding air interface frequencies, and sending digital signals of a same sector to an active antenna corresponding to the sector, wherein each operator corresponds to a different air interface frequency; and
performing at least one of vertical beam forming processing and horizontal beam forming processing on received digital signals by using the active antenna according to a signal transmitting parameter that is set for each operator, converting the processed digital signals into radio frequency signals, and then transmitting the radio frequency signals from an air interface.

22. The method according to claim 21, wherein the sending digital signals of a same sector to an active antenna corresponding to the sector specifically comprises:
performing down-conversion, digital filtering, and in-phase quadrature IQ signal extraction on the digital signals, performing scheduling and framing on IQ signals of the same sector, and then sending the IQ signals to the active antenna corresponding to the sector.

23. The method according to claim 21 or 22, wherein the signal transmitting parameter comprises an antenna tilt angle, and the performing, by using the active antenna, vertical beam forming processing on received digital signals specifically comprises: setting a corresponding digital beam forming DBF parameter according to an antenna tilt angle that is set for each operator, so that an independent adjustment on an antenna tilt angle of a beam of each operator can be implemented, wherein the setting a DBF parameter is to adjust a weight of the antenna tilt angle for a transceiver TRX channel that generates a beam in a vertical direction of the antenna.

24. The method according to any one of claims 21 to 23, wherein the signal transmitting parameter comprises an antenna azimuth or a beam width, and the performing, by using the active antenna, horizontal beam forming processing on received digital signals specifically comprises: setting a corresponding DBF parameter according to an antenna azimuth or a beam width that is set for each operator, so that an independent adjustment on at least one of an antenna azimuth and a beam width of a beam of each operator can be implemented, wherein the setting a DBF parameter is to adjust a weight of the antenna azimuth or the beam width for a TRX channel that generates a beam in a horizontal direction of the antenna.

25. The method according to any one of claims 21 to 24, wherein the method further comprises:
receiving, from a network management system and by using the radio frequency and digital conversion unit, a signal transmitting parameter that is set for each operator, and sending the signal transmitting parameter to the active antenna.

26. The method according to any one of claims 21 to 25, wherein before converting a radio frequency signal of each radio frequency module into a digital signal by using a radio frequency and digital conversion unit, the method further comprises:
receiving, by using a frequency converting unit, a radio frequency signal that comes from a radio frequency module of at least one operator, wherein the radio frequency module of the at least one operator is configured to process and output radio frequency signals that are of a same operator and correspond to different sectors, and the radio frequency signals corresponding to different sectors are differentiated by using different sector frequencies; converting a frequency of the radio frequency signals into a corresponding air interface frequency according to a correspondence between a sector frequency and an air interface frequency, and sending radio frequency signals whose frequency is converted to the radio frequency and digital conversion unit.

27. A method for sharing an antenna between multiple operators, wherein the method comprises:
converting, by using an active antenna, radio frequency signals that are received from an air interface and have at least two air interface frequencies into digital signals, and then performing at least one of vertical beam forming processing and horizontal beam forming processing on the digital signals according to a signal transmitting parameter that is set for each operator, and then sending the digital signals to a radio frequency and digital conversion unit, wherein each operator corresponds to a different air interface frequency; and
decomposing, by using the radio frequency and digital conversion unit, a digital signal sent by the active antenna into digital signals corresponding to radio frequency modules of at least two operators, and then converting the decomposed digital signals into radio frequency signals that correspond to the radio frequency modules of the at least two operators and have corresponding air interface frequencies, and sending the radio frequency signals to corresponding radio frequency modules.

28. The method according to claim 27, wherein the signal transmitting parameter comprises an antenna tilt angle, and the performing, by using an active antenna, vertical beam forming processing on the digital signals obtained after conversion specifically comprises: setting a corresponding digital beam forming DBF parameter according to an antenna tilt angle that is set for each operator, so that an independent adjustment on an antenna tilt angle of a beam of each operator can be implemented, wherein the setting a DBF parameter is to adjust a weight of the antenna tilt angle for a TRX channel that generates a beam in a vertical direction of the antenna.

29. The method according to claim 27 or 28, wherein the signal transmitting parameter comprises an antenna azimuth or a beam width, and the performing, by using the active antenna, horizontal beam forming processing on the digital signals obtained after conversion specifically comprises: setting a corresponding DBF parameter according to an antenna azimuth or a beam width that is set for each operator, so that an independent adjustment on at least one of an antenna azimuth and a beam width of a beam of each operator can be implemented, wherein the setting a DBF parameter is to adjust a weight of the antenna azimuth or the beam width for a TRX channel that generates a beam in a horizontal direction of the antenna.

30. The method according to claim 27, 28 or 29, wherein the decomposing, by using the radio frequency and digital conversion unit, a digital signal sent by the active antenna into digital signals corresponding to radio frequency modules of at least two operators, and then converting the decomposed digital signals into radio frequency signals that correspond to the radio frequency modules of the at least two operators and have corresponding air interface frequencies, and sending the radio frequency signals to corresponding radio frequency modules specifically comprise:
deframing, by using the radio frequency and digital conversion unit, a digital signal sent by the active antenna to separate out in-phase quadrature IQ signals of the at least two operators, and then performing up-conversion and digital-to-analog conversion on the IQ signals to convert the IQ signals into radio frequency signals, and sending radio frequency signals obtained by means of conversion to corresponding radio frequency modules.

31. The method according to any one of claims 27 to 30, wherein the method further comprises:
receiving, from a network management system and by using the radio frequency and digital conversion unit, a signal transmitting parameter that is set for each operator, and sending the signal transmitting parameter to the active antenna.

32. The method according to any one of claims 27 to 31, wherein after converting a digital signal into a radio frequency signal of each radio frequency module and sending the radio frequency signal to a corresponding radio frequency module separately, the method further comprises:
receiving, by using a frequency converting unit, a radio frequency signal sent by the radio frequency and digital conversion unit, converting a frequency of the radio frequency signal into a corresponding sector frequency according to a correspondence between a sector frequency and an air interface frequency, and then sending radio frequency signals of different sectors of a same operator to corresponding radio frequency modules, wherein the radio frequency module is configured to receive and process radio frequency signals that are of a same operator and correspond to different sectors, and the radio frequency signals corresponding to different sectors are differentiated by using different sector frequencies.
